# EUROPEAN PATENT SPECIFICATION

(11) **EP 0 340 668 B1**
(45) Date of publication and mention of the grant of the patent: **03.07.1996**
(21) Application number: 89107768.7
(22) Date of filing: 28.04.1989
(51) Int. Cl.: G06F 12/08

(54) **Multi-processor system having a multi-port cache memory**
Mehrprozessorsystem mit einem mehranschlüssigen Cachespeicher
Système multiprocesseur ayant une antémémoire à plusieurs accès

(30) Priority: 06.05.1988 JP 109045/88
(43) Date of publication of application: 08.11.1989
(73) Proprietor: HITACHI, LTD., Chiyoda-ku, Tokyo 101 (JP)
(72) Inventor: Bandoh, Tadaaki, Naka-gun Ibaraki-ken (JP)
(74) Representative: Patentanwälte Beetz - Timpe - Siegfried Schmitt-Fumian - Mayr

(56) References cited:
- EP-A- 0 100 943
- EP-A- 0 125 855
- EP-A- 0 284 751
- DE-A- 3 803 759
- IBM TECHNICAL DISCLOSURE BULLETIN. vol. 27, no. 12, May 1985, NEW YORK US pages 6845 - 6846; "SHARED INSTRUCTION AND/OR DATA CACHES IN A MULTIPROCESSING SYSTEM"
- PATENT ABSTRACTS OF JAPAN vol. 6, no. 96 (P-120)(974) 04 June 1982, & JP-A- 57 030169

## Description

The present invention relates toa multi-processor system according to the preamble of claim 1. Such a system is known from Patent Abstracts of Japan, No. 57-030169. In particular, it relates to a multi-processor system having a multi-port cache memory shared by a plurality of processors.

A multi-processor using a plurality of microprocessors is now being developed extensively. One example of such multi-processors disclosed in JP-A-56-127261 has a system configuration of a plurality of processors connected via buses. Each processor has its own cache memory in order to attain high performance and reduce bus traffics. Prior to accessing a main memory, each processor first accesses its associated cache memory, and only when a miss occurs, the main memory is accessed via a bus.

The problem associated with such a system is the coherence control of cache memories. The coherence control is effected so as to make the contents of cache memories of all processors always coincident with each other. In the system of the above-referenced JP-A-56-127261, a write-through type cache memory system is used wherein when data are written in a cache memory and the main memory, the write address thereof is fetched to the other cache memories so that the contents of the other cache memories at the same address are made invalid.

Use of such write-through type cache memories results in a high frequency of write operations into the main memory. In order to further reduce the write operation frequency, algorithms using write-back type cache memories, more improved write-once type cache memories, or the like have been developed. The details of these algorithms are to be referred to James R. Goodman "USING CACHE MEMORY TO REDUCE PROCESSOR - MEMORY TRAFFIC", The l0th Annual International Symposium on COMPUTER ARCHITECTURE, Vol. 11, No. 3, June 13 - 17, 1983.

Cache memories of the above-described types are suitable for those systems executing parallel processings of coarse grain units such as task or process units. However, parallel processings of fine grain units such as subroutines or modules are associated with a problem that data to be shared with processors become large. A larger amount of shared data results in frequent invalidations of data in cache memories upon data write operation into the main memory, and in a low hit rate at each cache memory.

The above system configurations have been realized aiming at reducing signal lines for linkage among processors each provided in one LSI chip. However, these configurations will not become optimum if a plurality of processors are fabricated in one LSI chip by employing an ultra very LSI technology.

From the Japanese Patent Abstract No. 57-030169 a cache memory control system is known. It comprises a processor and a central processor. The cache memory comprises two ports, respectively connected to one of the processors. The internal constitution of the ports and the cache itself is not known.

From IBM Technical Disclosure Bulletin, Vol. 27, No. 12, May 1985, shared instruction and/or data caches in a multi-processing system are known. In dependence of which data are to be held (instruction data or operand data), related caches are provided either individually for each processor or shared by a plurality of processors.

It is therefore an object of the present invention to provide a multi-processor system having a cache memory suitable for parallel processing of data accessed by each processor.

This object is solved in accordance with the features of independent claim 1. Dependent claims are directed on preferred embodiments of the invention.

According to the invention, a plurality of processors and a multi-port cache memory are arranged on a single LSI chip. On this single chip a multi-port cache memory is constructed of a single data storage area and a plurality of data read/write ports. Therefore, all processors refer to the same data stored in the memory, with immediate reflection of a write operation by any one of the processors. Contrary to this, a conventional system uses a plurality of cache memories so that, if one of processors writes data in an associated cache memory, the corresponding contents of the cache memories of the other processors should be made invalid, hence degrading the system performance. The present invention can overcome such disadvantages.
Fig. 1 is a schematic block diagram showing an embodiment of a multi-processor system according to the present invention;
Fig. 2 is a schematic diagram showing an example of a multi-port memory;
Fig. 3 is a timing chart illustrating the operation of the multi-port memory shown in Fig. 2;
Fig. 4 is a circuit diagram showing an example of the circuit arrangement of a multi-port memory;
Fig. 5 is a schematic block diagram showing an embodiment of a cache memory using a multi-port cache memory;
Fig. 6 shows the functions of LINK;
Fig. 7 is a schematic block diagram showing a second embodiment of the multi-processor system using a multi-port cache memory according to the present invention; and
Fig. 8 is a schematic block diagram showing a third embodiment of the multi-processor system using a multi-port cache memory according to the present invention.

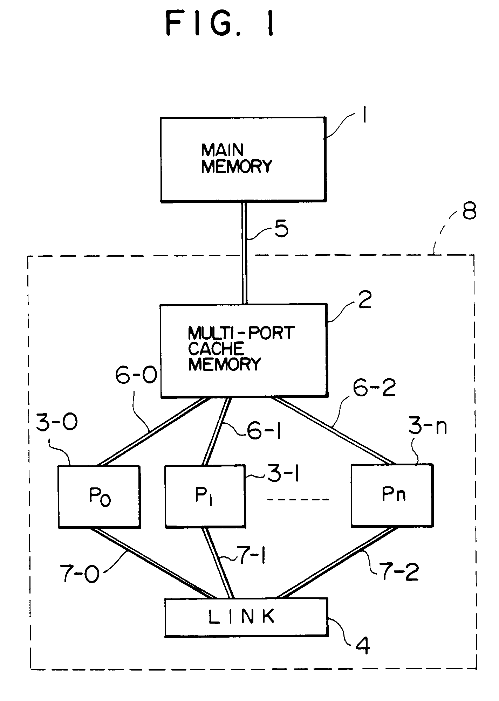

The configuration of a multi-processor system of this invention is shown in Fig. 1. A plurality of processors P0 to Pn (3-0 to 3-n) are fabricated in a single LSI chip 8 and use in common a multi-port cache memory 2. The operation of the cache memory 2 is the same as that of a general cache memory. Namely, if a memory access by a processor is a hit, then data in the cache memory are sent back. Alternatively, in the case of a mishit, the main memory is accessed, and the data are stored in the cache memory and also sent back to the processor.

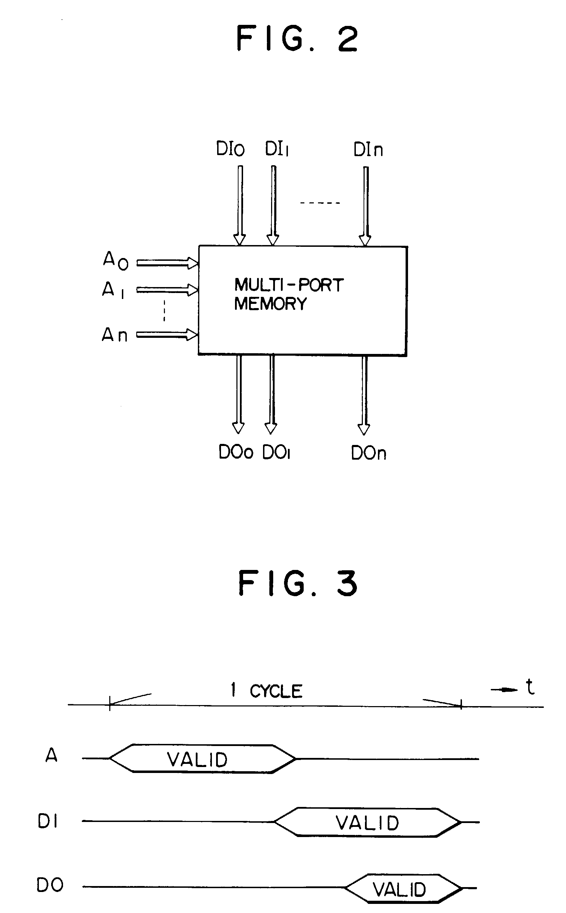

As shown in Fig. 1, a multi-port memory is used as cache memory. Fig. 2 shows the structure of a multi-port memory. The multi-port memory has interface signals constituted by a plurality of sets of address signals A0 to An (each set is constructed of a plurality of address lines), a plurality of sets of input data signals DI0 to DIn (each set is constructed of a plurality of data lines), a plurality of sets of output data signals DO0 to DOn (each set is constructed of a plurality of data lines) and control signals (not shown) such as a write enable signal. Thus, the multi-port cache memory 2 is considered as an independent memory as seen from each processor. Specifically, processor PO can write data from DI0 in the memory and read data in the memory via DO0, respectively at designated address A0.

Data read/write operations at respective ports are carried out synchronously with each other, the timings of which are shown in Fig. 3. If a plurality of processors access data at the same address, the same data are read and supplied to the processors. If read and write operations are designated at the same address A, data D0 at the address are first read and thereafter, new data DI are written at the address. If a plurality of write operations are designated at the same address, the write operations are executed in the order of higher priority among A0 to An under control of a priority control circuit.

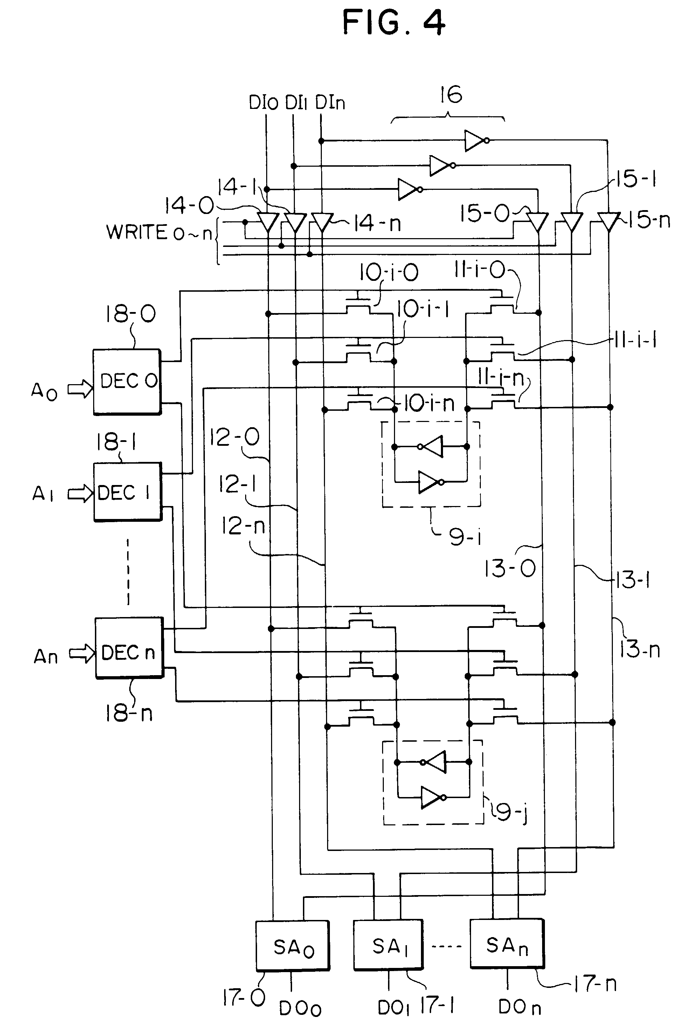

The circuit arrangement of a multi-port memory is shown in Fig. 4. Information is stored in a memory cell indicated at 9-i, 9-j.

In data read operation, gates 14-0 to 14-n and gates 15-0 to 15-n are closed since all WRITE 0-n are disabled. In the case of an access from address A0 for example, address A0 is decoded at a decoder DECO 18-0 and gates 10-i-0 and 11-i-0 are opened so that information in the memory cell 9-i is read out onto bit lines 12-0 and 13-0 which are then amplified at a sense amplifier SA0 17-0 and outputted from port DO0.

Similarly, in the case of an access from address A1, information is outputted via a sense amplifier SA1 from port DO1, and in the case of an access from address An, information is outputted via a sense amplifier SAn from port DOn.

In data write operation, data from DI0 are applied to a gate 14-0, and after inversion at an inverter 16 to a gate 15-0. Upon reception of a write signal WRITE 0, the gates 14-0 and 15-0 are opened so that data of opposite polarities are transferred onto bit lines 12-0 and 13-0 and written into a memory cell 9-i via gates 10-i-0 and 11-i-0.

If read and write operations are designated for the same memory cell, e.g., if a read operation is designated by address A0 and a write operation is designated by address A1, data are first read from the memory cell and applied to sense amplifier SA0 and thereafter, write signal WRITE 1 becomes true to open gates 14-0 and 15-0 and conduct a write operation.

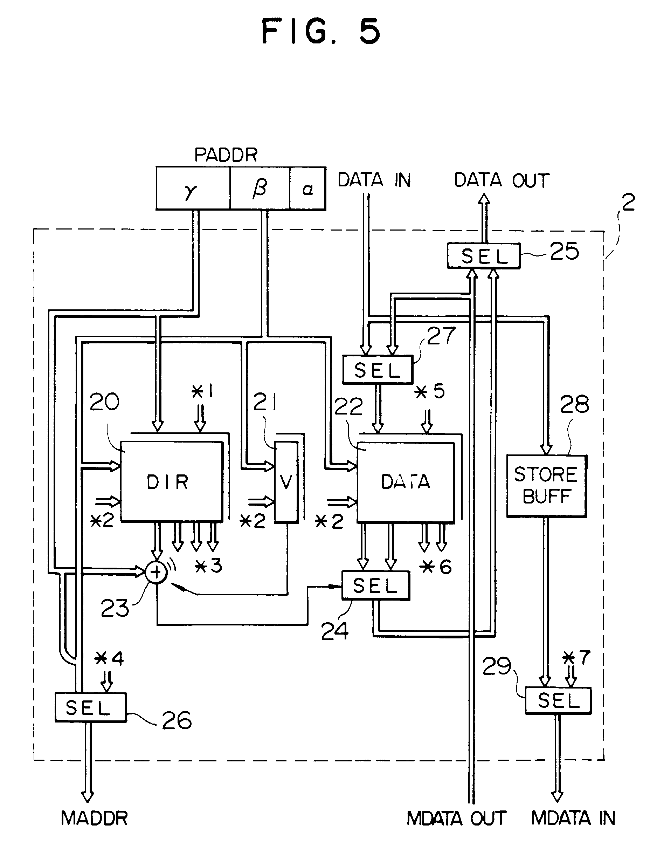

The structure of a cache memory 2 using multi-port memories is shown in Fig. 5. An address to access the cache memory 2 from a processor is designated by PADDR. This cache memory is of a set associative type. The field α in PADDR represents an address in an address block in the cache memory 2, and a column address of the cache memory 2 is represented by β field in PADDR.

A directory (which may be called "tag") DIR 20 stores therein the contents that which data of address blocks are stored in the cache memory 2. DATA 22 is an area for storing cache data. The β field within PADDR sent from a processor is used for access to DIR 20. The access result is compared with the γ field within PADDR at 23. The contents corresponding in number to the number of sets are read from DIR 20. If any one of the read-out contents has the same value as γ, it means that the access is a hit. Bits V 21 indicate whether the entries of DIR 20 are valid or invalid. The contents corresponding in number to the number of sets are also read from DATA 22 using the β field within PADDR as their address. Data corresponding to the hit set are selected by a selector SEL 24 and sent via a selector 25 to the processor as data DATAOUT.

If the cache memory is not hit, address fields γ and β are transferred via a selector 26 to the main memory. In writing data into the main memory, data DATAIN supplied from a processor are written in DATA 22 of the cache memory 2 via a selector 27, and also in a store buffer 28 and then into the main memory via a selector 29. In this embodiment, a store-through type cache memory is used.

In Fig. 5, reference numerals with an asterisk represent interfaces with other processors. Namely, the γ fields from other processors (hereinafter indicated by γ′ field) are supplied to *1, and the β fields within PADDR from other processors (hereinafter indicated by β′ field) are supplied to *2. The corresponding read-out contents are represented by *3 which are compared with γ′. If they are coincident with each other, the accesses are considered as hits so that the read-out data *6 are selected. β′ and γ′ from other processors are inputted to *4. Outputs from store buffers of other processors are supplied to *7. The output of the selector 27 of other processors is supplied to *5.

Multi-port memories are used for DIR 20, V21 and DATA 22 so that a plurality of processors can access the cache memory 2 at the same time.

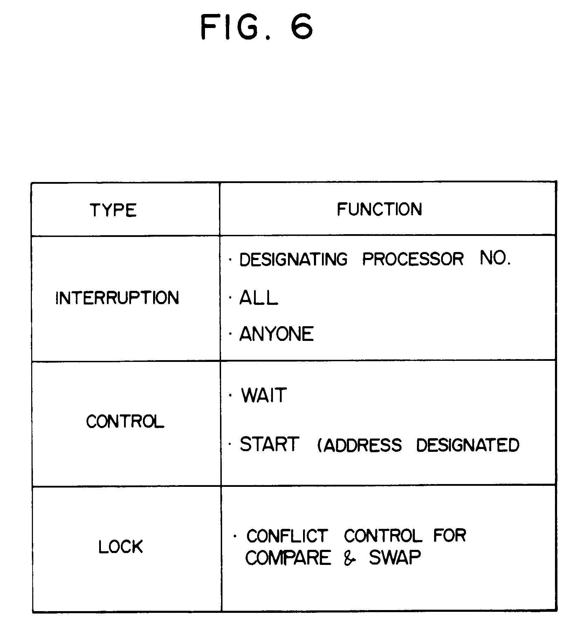

Fig. 6 shows the functions of LINK which is a device for interconnecting processors constituting a multi-processor system.

There are three interruption functions, i.e., an interruption while designating the number of a processor, an interruption while broadcasting to ALL processors, and an interruption allowing ANYONE of processors to accept.

Control functions include various operations so as to efficiently execute parallel processings. They are a WAIT control for waiting until a start signal from another processor reaches, a START control for releasing the WAIT control, and other controls. The START control can be executed while designating an execution start address.

A lock function is used for subjecting the cache memory to a Test and Set operation and a Compare and Swap operation. In the Compare and Swap operation, data in the memory are read and the value of read-out data is checked, and then data write operation to the memory may be carried out in accordance with the check result. During the Compare and Swap operation by a processor, it is necessary for other processors not to execute the Compare and Swap operation at the same address.

For this reason, prior to executing a Compare and Swap operation, each processor sends a Compare and Swap execution request to LINK. If the request is acknowledged, then the Compare and Swap operation is executed and thereafter the request is cancelled. If a plurality of requests are sent from processors, LINK allows only one request to be executed.

The multi-processor system using a multi-processor-on-chip having a plurality of processors, a multi-port cache memory and LINK has been described above. Use of this multi-port cache memory allows a system high performance not realized in a conventional system having frequent invalidations and performance degradation in preserving coherence.

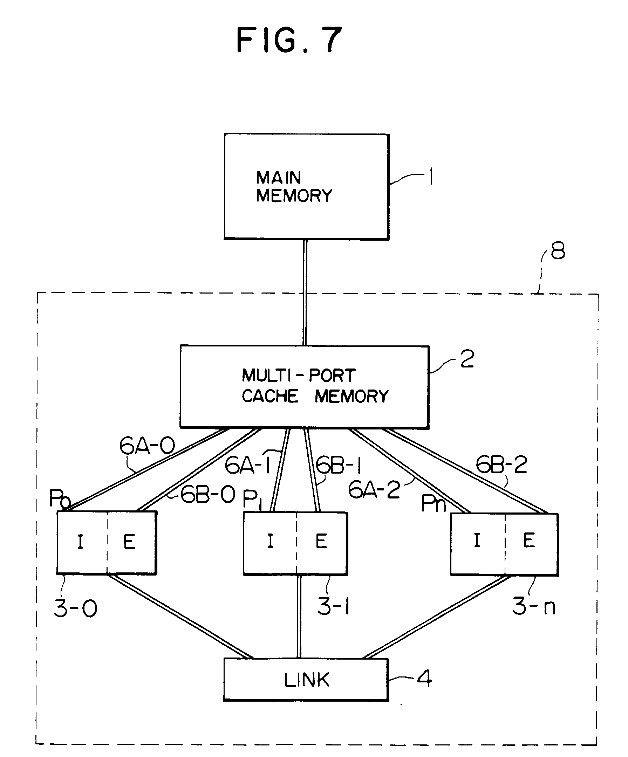

Fig. 7 shows a modification of a multi-port cache memory. A recent high performance processor controls an instruction execution by using a multi-stage pipeline. A typical example of dividing an instruction execution includes an instruction fetch (IF), decode (D), address translation (A), operand fetch (OF) and execution (E). Memory access is carried out two times at the instruction fetch cycle and operand fetch cycle. In executing the two cycles in parallel, two sets of interfaces are required for a multi-port cache memory. Fig. 7 shows the system configuration for such use. Two sets of interfaces 6A-0 and 6B-0, respectively for instruction/operand fetch (data read/write), are used instead of one set 6-0 shown in Fig. 1.

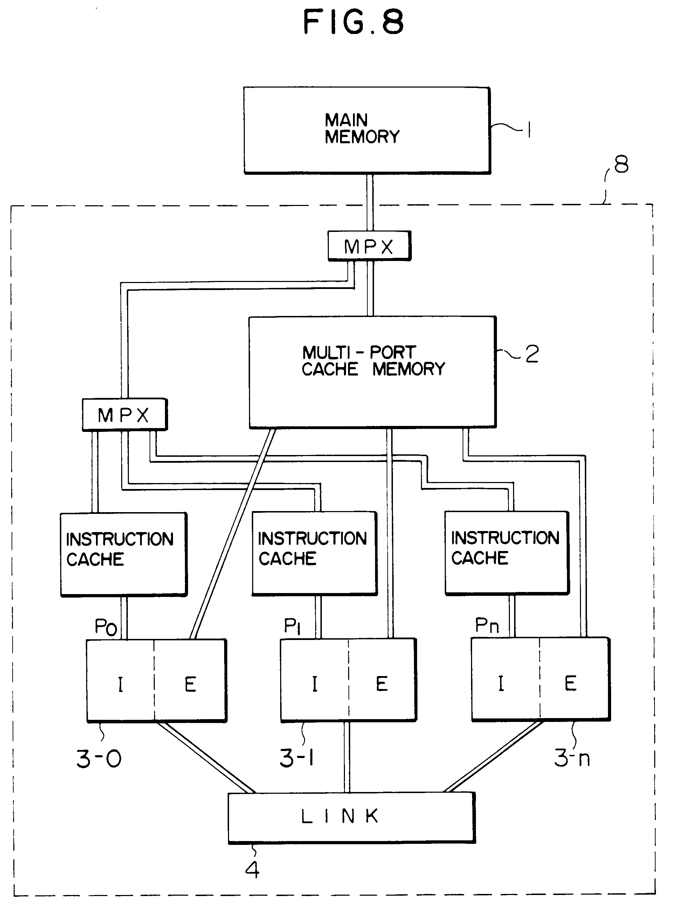

Fig. 8 shows another modification of a multi-port cache memory, wherein each processor has its own cache memory for instructions, and a multi-port cache memory shared with all processors is used only for operands. The reason for this is that an instruction is generally of pure procedure without rewriting it, thus no need of using a multi-port cache memory for instructions.

A multi-port cache memory has a number of writings and a large area as compared with its memory capacity. Therefore, a multi-port cache memory is less cost effective than a single port cache memory. The system configuration shown in Fig. 8 accordingly has a multi-port cache memory which is used only for minimum necessary data.

## Claims

1. A multi-processor system comprising on a single chip:
A plurality of processors (P-0, ..., P-n), each of them having a set of address- and data interface signal lines (6), and
a multiport cache memory (2) comprising a directory (DIR 20) and a data memory (22) which comprises a plurality of memory cells (9) and a plurality of sets of ports, each set of ports comprising an address port (A), a data input port (DI) and a data output port (DO), each set of ports being connectable to one set of said signal lines (6) respectively, the cache memory being **characterized by**
a plurality of address decoding means (18-0, ... 18-n), each address decoding means being connected to the address port (A) of the corresponding set of ports for synchronously decoding the address signals from the corresponding processor and for selecting the memory cells;
a plurality of sensing means (17-0, ..., 17-n), each sensing means being connected to the data output port (DO) of the corresponding set for synchronously sensing the selected memory cells and for providing the sensed signals to the corresponding processor;
a plurality of writing means (14-0, ... 14-n, 15-0, . ..., 15-n, 16), each writing means being connected to the data input port (DI) of the corresponding set for synchronously receiving data signals from the corresponding processors and writing said data signals in the selected memory cells;
wherein, if a number of processors perform a read and write access of data at the same address, said sensing and writing means first perform a read operation and then a write operation, and
wherein, if a number of processors perform a write access of data at the same address, the write operations are executed in priority order.

2. System according to claim 1,
characterized in that
the plurality of processors (P-0, ..., P-n) and the cache memory (2) are fabricated on a single LSI-chip.

3. System according to claim 1,
characterized in that
each of the processors (P-0, ..., P-n) is connected to the cache memory (2) by two or more sets of interface signal lines (6A, 6B).

4. System according to claim 1,
characterized in that
an instruction cache memory is additionally provided for each of the processors (P-0, ..., P-n).

## Patentansprüche

1. Multiprozessorsystem, das auf einem einzigen Chip aufweist:
mehrere Prozessoren (P-0, ..., P-n), von denen jeder einen Satz von Adressen- und Datenschnittstellen-Signalleitungen (6) hat, und
einen Cache-Speicher (2) mit mehreren Zugängen, der einen Verzeichnisspeicher (DIR 20) und einen Datenspeicher (22) aufweist, der mehrere Speicherzellen (9) und mehrere Sätze von Zugängen aufweist, wobei jeder Zugangssatz einen Adreßzugang (A), einen Dateneingabezugang (DI) und einen Datenausgabezugang (DO) aufweist, und wobei jeder Zugangssatz jeweils mit einem Signalleitungssatz (6) verbindbar ist, und wobei der Cache-Speicher gekennzeichnet ist durch
mehrere Adreßdecodiereinrichtungen (18-0, ... 18-n), wobei jede Adreßdecodiereinrichtung mit dem Adreßzugang (A) des entsprechenden Zugangssatzes verbunden ist, um die Adreßsignale von dem entsprechenden Prozessor synchron zu decodieren und die Speicherzellen auszuwählen; mehrere Erfassungeinrichtungen (17-0, ... 17-n) , wobei jede Erfassungseinrichtung mit dem Datenausgabezugang (DO) des entsprechenden Satzes verbunden ist, um synchron die ausgewählten Speicherzellen zu erfassen und die erfaßten Signale dem entsprechenden Prozessor zuzuleiten; mehrere Schreibeinrichtungen (14-0, ... 14-n, 15-0, ... 15-n, 16), wobei jede Schreibeinrichtung mit dem Dateneingabezugang (DI) des entsprechenden Satzes verbunden ist, um synchron von den entsprechenden Prozessoren Datensignale zu empfangen und die Datensignale in die ausgewählten Speicherzellen zu schreiben;
wobei dann, wenn mehrere Prozessoren einen Lese- oder Schreibzugriff auf Daten an der gleichen Adresse ausführen, die Erfassungs- und die Schreibeinrichtungen erst einen Lesevorgang und dann einen Schreibvorgang durchführen und
wobei dann, wenn mehrere Prozessoren einen Schreibzugriff für Daten an der gleichen Adresse ausführen, die Schreibvorgänge in der Reihenfolge ihrer Priorität ausgeführt werden.

2. System nach Anspruch 1,
dadurch gekennzeichnet, daß
die Prozessoren (P-0, ... P-n) und der Cache-Speicher (2) auf einem einzigen LSI-Chip hergestellt sind.

3. System nach Anspruch 1,
dadurch gekennzeichnet, daß
jeder Prozessor (P-0, ... P-n) mit dem Cache-Speicher (2) über zwei oder mehr Sätze von Schnittstellensignalleitungen (6A, 6B) verbunden ist.

4. System nach Anspruch 1,
dadurch gekennzeichnet, daß
für jeden Prozessor (P-0, ... P-n) zusätzlich ein Befehl-Cache-Speicher vorgesehen ist.

## Revendications

1. Système multiprocesseur comportant, sur une puce unique :
plusieurs processeurs (P-0, ..., P-n), chacun d'eux ayant un ensemble de lignes de transmission de signaux (6) formant interface d'adresse et de données, et
une antémémoire (2) à plusieurs accès comportant un répertoire (DIR 20) et une mémoire de données (22) qui comporte plusieurs cellules de mémoire (9) et plusieurs ensembles d'accès, chaque ensemble d'accès comportant un accès d'adresse (A), un accès d'entrée de données (DI) et un accès de sortie de données (DO), chaque ensemble d'accès pouvant être connecté à un ensemble desdites lignes de transmission de signaux (6) respectivement, l'antémémoire étant caractérisée en ce qu'elle comporte
plusieurs moyens de décodage d'adresse (18-0, ..., 18-n), chacun des moyens de décodage d'adresse étant connecté à l'accès d'adresse (A) de l'ensemble d'accès correspondant pour décoder de manière synchronisée les signaux d'adresse provenant du processeur correspondant et pour sélectionner les cellules mémoire,
plusieurs moyens de détection (17-0, ..., 17-n), chacun des moyens de détection étant connecté à l'accès de sortie de données (DO) de l'ensemble correspondant pour détecter de manière synchronisée les cellules mémoires sélectionnées et pour envoyer les signaux détectés vers le processeur correspondant,
plusieurs moyens d'écriture (14-0, ..., 14-n, 15-0, ..., 15-n, 16), chacun des moyens d'écriture étant connecté à l'accès d'entrée de données (DI) de l'ensemble correspondant pour recevoir de manière synchronisée les signaux de données provenant des processeurs correspondants et écrire lesdits signaux de données dans les cellules de mémoire sélectionnées,
dans lequel, si plusieurs processeurs effectuent un accès en lecture et en écriture pour des données situées à la même adresse, lesdits moins de détection et d'écriture effectuent d'abord une opération de lecture et ensuite une opération d'écriture, et
dans lequel, si plusieurs processeurs effectuent un accès en écriture pour des données situées à la même adresse, les opérations d'écriture sont exécutées dans l'ordre de priorité.

2. Système selon la revendication 1,
caractérisé en ce que
les plusieurs processeurs (P-0, ..., P-n) et l'antémémoire (2) sont fabriqués sur une seule puce LSI.

3. Système selon la revendication 1,
caractérisé en ce que
chacun des processeurs (P-0 ..., P-n) est connecté à l'antémémoire (2) par l'intermédiaire de deux ou de plus de deux ensembles de lignes de transmission de signaux (6A, 6B) formant interface.

4. Système selon la revendication 1,
caractérisé en ce qu'une antémémoire d'instruction est agencée de manière additionnelle pour chacun des processeurs (P-0, ..., P-n).
